# EUROPEAN PATENT APPLICATION

(11) **EP 1 209 594 A2**
(43) Date of publication of application: **29.05.2002**
(21) Application number: 01125346.5
(22) Date of filing: 29.10.2001
(51) Int. Cl.: G06F 17/60

(54) **User-supporting advertising on communications networks**

(30) Priority: 13.11.2000 US 711591
(71) Applicant: Alcatel USA Sourcing, L.P., Plano, Texas 75075-5813 (US)
(72) Inventor: Stevens, Gilman R., Fairview, TX 75069 (US); Mani, Babu V., Plano, TX 75025 (US)
(74) Representative: Dreiss, Fuhlendorf, Steimle & Becker

(57) **Abstract**

A method and system for sending advertisements (18) to a user over a network (24) uses a profile (30) of detailed information for each user. The profile could include, for example, information on the users' financial status, age, gender, occupation, interests, shopping habits and so on. Information from profile may be provided to one or more advertisers (20, 22). When advertisers (20, 22) send advertisements (18) to the user over the global network (24), the user's account (36) is credited. The amount paid to each user may be a fee set by the user, a fee set by bidding, or a fixed fee. Advertisers who do not pay a fee may be filtered out.

## Description

### BACKGROUND OF THE INVENTION

### 1. TECHNICAL FIELD

This invention relates in general to communications networks and, more particularly, to advertising on communications networks.

### 2. DESCRIPTION OF THE RELATED ART

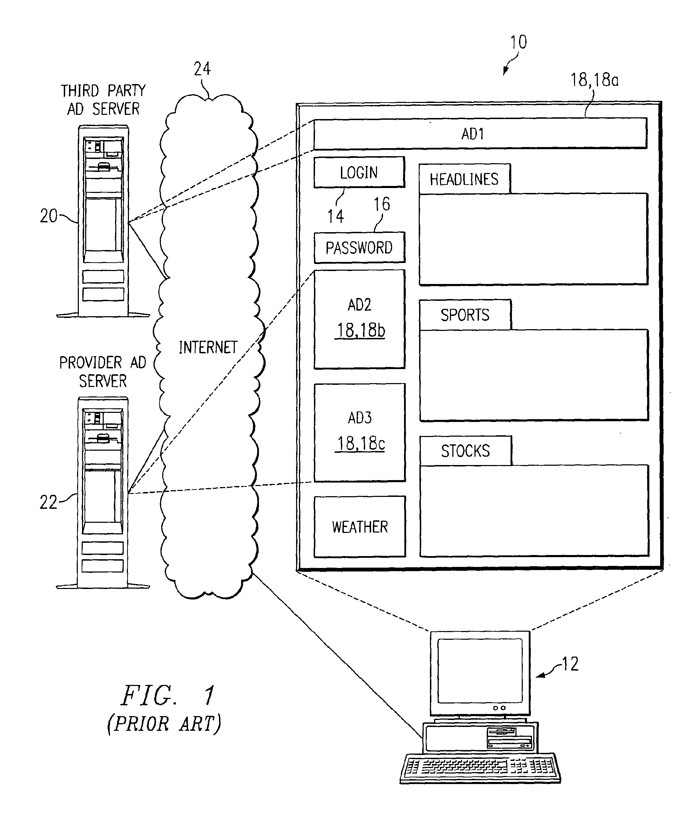

Over the last decade, communications networks, and especially global data networks such as the Internet, have become major outlets for commercial advertising. Figure 1 illustrates a typical setup for providing advertising on the Internet. In this example, a web page "portal" 10 is shown as displayed on a user computer 12. A portal is a web site that a user accesses as a home base for many other services. In general, a user can configure a portal to his or her personal tastes by selecting desirable features. For example, in Figure 1, the user has selected "Headlines", "Sports" "Stocks" and "Weather" to be displayed on the portal page. By specifying a locality, typically by zip code, local information can be sent to the user. The particular configuration is associated with a login name 14 and password 16. By associating the configuration with a login name and password, the selected features may be displayed whenever the user accesses the page; further, the password keeps others from viewing information, such as a stock portfolio, which may be private.

In many cases, the portal provides links to other services such as searching, shopping, and so on.

Naturally, the provider of the portal services incurs significant costs. A major source of revenue is advertising. Figure 1 shows three advertising frames 18, a banner frame 18a and two smaller advertising frames 18b and 18c. In the illustrated embodiment, the portal provider sells the banner frame 18a to a third party advertising agent, such as DOUBLECLICK or ADKNOWLEDGE, and directly provides advertising for advertising frames 18b and 18c. Accordingly, frame 18a is mapped to third party ad server 20 and frames 18b and 18c are mapped to the provider ad server 22. Ads are passed to the user computer 12 through the Internet 24 or other global data network.

It should be noted that the specifics of the advertising shown in Figure 1 are made only for illustration; the number of ads, size and placement vary significantly from provider to provider. Further, any number of ad servers could be used in an actual embodiment; the provider may use any number of different sources for advertising. Finally, the benefits of advertising revenue apply to many different types of sites, not just portals.

A particular problem for advertisers and Internet ad agencies is sending relevant ads to a user. Advertising pricing varies significantly based on a number of factors, but a large number of advertisers pay the site owner a certain amount each time their advertisement is presented to a user, and an additional amount if the user accesses the advertisement for additional information. Accordingly, it benefits all parties if advertisements are sent to users with a possible interest in the advertisement. For example, if an advertisement for mutual funds is presented to a ten-year-old user, the advertiser has lost revenue, because it has paid for presentation of an advertisement to someone who is extremely unlikely to purchase investment services. The ad agency and web site owner have also lost money because there is little chance that the user will access the advertisement to obtain additional information.

Accordingly, the advertiser, ad agency and web site owner all have reason to direct advertisements to potential customers. Several approaches have been used for this purpose. First, sites that have a particular focus, such as a site on computer news, have an inherent association with consumers of computer products. However, even where there is an inherent association, advertising decisions are still difficult. In the example of the computer news site, the possible users would include people interested primarily in computer games and people interested in business use for computers. In addition to advertisements for computer games, advertisers would like to direct ads for non-computer items, such as skateboards, roller blades, and so on, to these users. However, these ads would have little benefit to the business users. On the other hand, advertisers would like to present ads for office supplies and insurance to the business users; however, these would have little relevance to the computer games.

In order to more efficiently allocate the advertising resources, ad agencies and providers often look at information on the user's computer, which raises concerns of privacy. One technique is to look at "cookies", which are bits of information stored on each user's computer by various web sites. Viewing this information may indicate, for example, income information, recently purchased products, and recently visited web sites.

There are several problems with this approach. First, user's often object to use of this information and can prevent use of the information using programs such as OPTOUT. Privacy rights advocates are also working towards legislation to prevent sites from viewing information on a user's computer without explicit permission. Second, if there are multiple users on the computer, it is not possible to distinguish the interests of each individual user.

Therefore, a need has arisen for a more effective method and apparatus for matching advertising resources with potential purchasers.

### BRIEF SUMMARY OF THE INVENTION

In the present invention, an improved method of sending advertisements to a user over a network is provided. A profile is maintained for a user. Information from the profile may be provided to one or more advertisers. When advertisers send advertisements to the user over the network, the user's account is credited.

The present invention provides significant advantages over the prior art. The profile can provide detailed information about the user, such as financial status, age, gender, occupation, interests, shopping habits and so on. Advertisers can judge which ads, if any, should be sent to the user based on the profile. Since the ads can be accurately directed to the user, the extra value in the advertisement accuracy can be used to pay the user. The user profits from the advertising and is therefore more likely to visit sites, which provide user-supporting advertising. Since the advertisements are much more likely to be of interest to the user, the user will pay more attention to the advertisements during browsing.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
Figure 1 is a block diagram showing an example of a prior art Internet portal;
Figure 2 is a block diagram of a user-supporting advertising system;
Figure 3 is an overall functional diagram of the user-supporting advertising system of Figure 2;
Figure 4 is a flow chart of the Profile Maintenance task of Figure 2;
Figure 5 is a flow chart of the Price Negotiating task of Figure 2;
Figure 6 is a flow chart of the Ad Filtering task of Figure 2;
Figure 7 is a flow chart of the Accounting task of Figure 2;
Figure 8 is an embodiment of the user-supporting advertising system of Figure 2 using a third party Internet site; and
Figure 9 shows a dialog box for variable advertising prices based on multiple criteria.

### DETAILED DESCRIPTION OF THE INVENTION

The present invention is best understood in relation to Figures 1 - 9 of the drawings, like numerals being used for like elements of the various drawings.

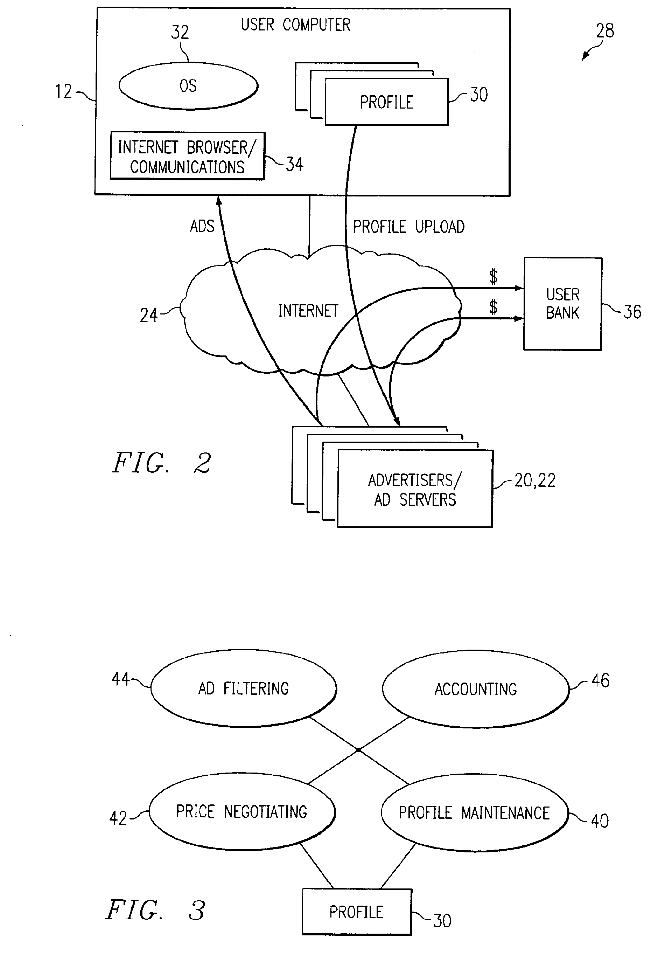

Figure 2 illustrates a block diagram that describes the basic operation of a preferred embodiment of a user-supporting advertising system 28. The user computer 12 stores one or more profiles, each profile associated with a respective individual user of the computer, in its memory, typically in a directory on the computer's hard drive or at a designated Internet site. The operation of the computer 12 is controlled, at least in part, by an operating system (OS) 32. The computer is executing an Internet browser 34 (and other communications software) in order to communicate with other computers over the Internet 24. Throughout this specification, the user-supporting advertising system 28 will be described in relation to the "Internet"; the system would, of course, work on any communications network architecture where advertisements may be sent to users.

The profiles 30 provide information that would be useful to various advertisers. For example, the profiles 30 could provide: (1) personal statistical information, such as gender, age, height, weight, employment information and marital/family status, (2) financial information, such as yearly income and stock/bond portfolios, (3) personal property information, such as mortgage and automobile data, (4) hobbies and interest, (5) shopping habits, such as monthly expenditures on a variety of goods, and list of items to be purchased in the near future and items of immediate interests, (6) internet browsing habits, such as the last fifty sites visited by the user, (7) a tickler file regarding important dates, friends, relatives, work associates, and customer gifts, along with associated anonymous information for each of the foregoing, to direct advertisements for gift buying and (8) exclusions (marketing the user is not interested in), such as adult sites, gambling sites, and so on.

In addition, in the preferred embodiment, the profiles 30 contain payment information regarding the cost of obtaining the profiles 30 and the cost of providing the users with advertisements. For example, a user could set a fee of $25 for an advertiser to receive information from a profile, and a fee of fifty cents for each advertisement received. More complicated fee arrangements could involve different prices dependent upon the type of advertiser, type of product, time of day, day of week, or other desirable criteria. Accessing the user profile could be charged on a one-time only basis or an unlimited access (real-time) basis.

In operation, if an advertiser (including ad provider services) wishes to upload the profile, it must pay the specified cost. Similarly, to download an advertisement to a web site compatible with the user-supporting advertising system, the ad provider must pay a fee to the user. Payments to the user can be made directly to an account at a financial institution 36 using EDI (electronic data interchange) or ACH (Automatic Clearing House) protocols. Payments would not necessarily need to be in cash; a point system, such as GREENPOINTS, or CLICKPOINTS, could also be used, where the user receives points for each advertisement download or profile upload; the user can accumulate points and redeem the points for goods or services. Points could also be redeemed for provider service fees (such as Internet access fees), so that users are charged only if the advertising revenue falls below a certain level. Further, points could be redeemed toward special services at certain sites. For example, an investment site could provide research capabilities and real-time quotes for a set amount of points.

In order to have cooperation from web sites, a payment would also be made to the web site providers, similar to the payments that are currently made from advertisers to the web sites.

Profiles for computers used by multiple users could have several different implementations. In one embodiment, the each user has an individual profile 30. The current user of the computer 12 can be identified through a number of mechanisms. First, the user could be identified through use of the family logon feature of MICROSOFT WINDOWS, which allows different users to have different preferences in the operating system. Whenever a new user logs on, the active profile changes to the profile 30 associated with the new user. Alternatively, users could manually change the active profile through a dialog box or similar software mechanism.

Figure 3 illustrates four interrelated software functions used to provide the user-supporting advertising system. A Profile Maintenance task 40 maintains the data of the user profiles 30. A Price Negotiating task 42 interfaces with an advertiser (direct or indirect) to transfer information from the profiles and set prices for advertising. An Ad Filtering task 44 blocks unauthorized advertisements from presentation on the user's computer. An Accounting task 46 keeps track of payments due to the user.

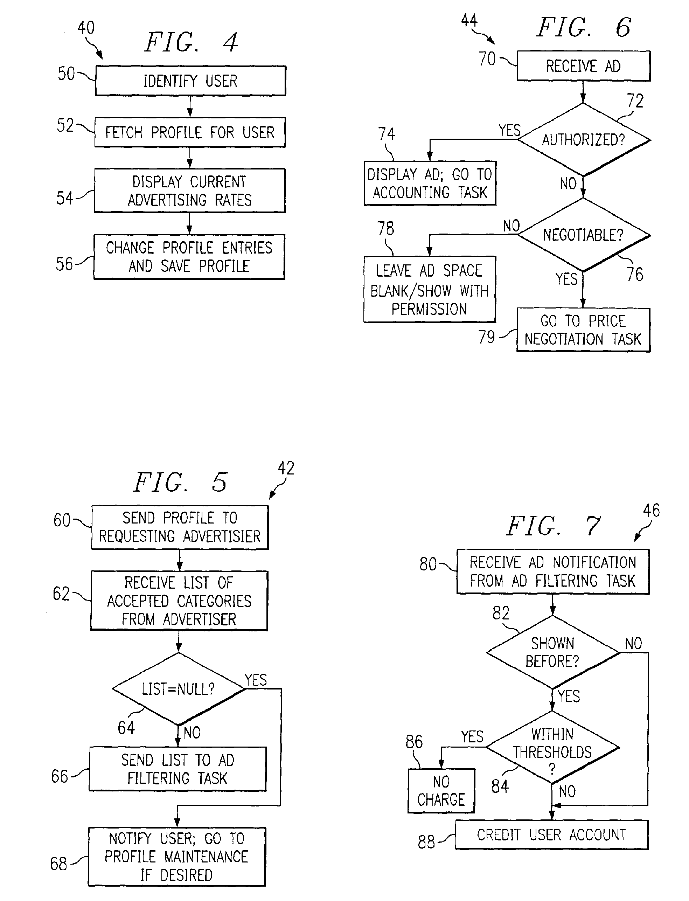

Figure 4 illustrates a flow chart for the preferred embodiment of the Profile Maintenance task 40. In step 50, the current user of the computer is identified. Identification could be implemented using the Windows Family Logon (or similar logon routine for other operating systems), a dialog box which is initiated at startup, and which may be executed upon request of the user, or through a login process with a web site. In step 52, the profile 30 for the current user is fetched. In block 54, an estimate of the current advertising rates are displayed; this step is optional, but may be useful for setting rates in the profile. In step 56, the profile fields may be changed by the current user and saved.

Figure 5 illustrates a flow chart for the preferred embodiment for the Price Negotiation task 42. In step 60, information from the profile for the current user identified in the Profile Maintenance task 40 is uploaded to one or more advertisers. The profile information may be used for the advertisers to determine the type of advertisements to send to a particular user based on the interests of the current user, the user's personal data, and the rate that the user has set for receiving advertisements. Either the entire profile could be uploaded to the advertisers, or the advertisers could query the profile to obtain filtered information. In step 62, one or more advertisers accept the prices for advertisements in certain categories. For example, if a user set a price of two dollars per investment advertisement and fifty cents for automobile advertisements, an advertiser (typically, a third party advertisement provider) may accept the price for automobile advertisements, but not accept the price for investment providers.

So long as the list of accepted advertisement categories is null in decision block 64, the list will be sent to the Ad Filtering task 44 and the transmission of advertisements can begin. If the list of accepted advertisement categories is null, the user is notified in step 68. This allows the user to change his profile in order to receive advertising revenue. If the user is not interested in receiving advertisements (or revenue), the user could continue browsing.

Optionally, the user can receive a list of categories that were accepted by the advertiser; this may aid in setting prices for various categories. Further, other methods of negotiation with advertisers could be used. For example, in one embodiment, multiple advertisers could bid on the right to send advertisements to the user based on the profile data. In another embodiment, the advertiser may send a list of prices by advertising category. The user could then select from those advertisements, based on the type of advertisement and the amount being paid. In another embodiment, the user may set prices for each advertisement type and the advertiser may respond with an acceptable offer for each advertisement type in response. The user could accept or reject the offer for each advertisement type. A variation of this would to have the Price Negotiation task 42 employ some artificial intelligence to negotiate automatically with the advertiser.

Figure 6 illustrates a flow chart for the preferred embodiment for the Ad Filtering task 44. In step 70, an advertisement is received for display. If the advertisement is authorized (i.e., one which has been authorized through the Price Negotiation task 42), it is displayed in step 74 and the Accounting task 46 is invoked to account for the revenue due to the user (the current web site would have a separate accounting task to get its commission for the advertisement).

It is possible, however, that the advertisement will not be authorized. For example, each time the user connects to a new web site (or in some cases, a different page on the same site), it is possible that the source of the advertisement may be one that has not gone through the Price Negotiation task 42 in the current browsing session. In fact, some advertisers may not be set up to communicate with the Price Negotiation task (i.e., the advertiser is not willing to pay anything to the user for displaying the advertisement). If the advertisement is not authorized in step 72, the Ad Filtering task determines whether the advertiser can negotiate in decision block 76. If not, the ad space is left blank, unless the user profile specifies that these types of advertisements should be shown. Blanking an advertisement space may be performed using techniques implemented in several available programs, for example, by redirecting the advertisement to an IP address that does not affect the user's display. If the advertiser can negotiate in decision block 76, the Price Negotiation task is invoked.

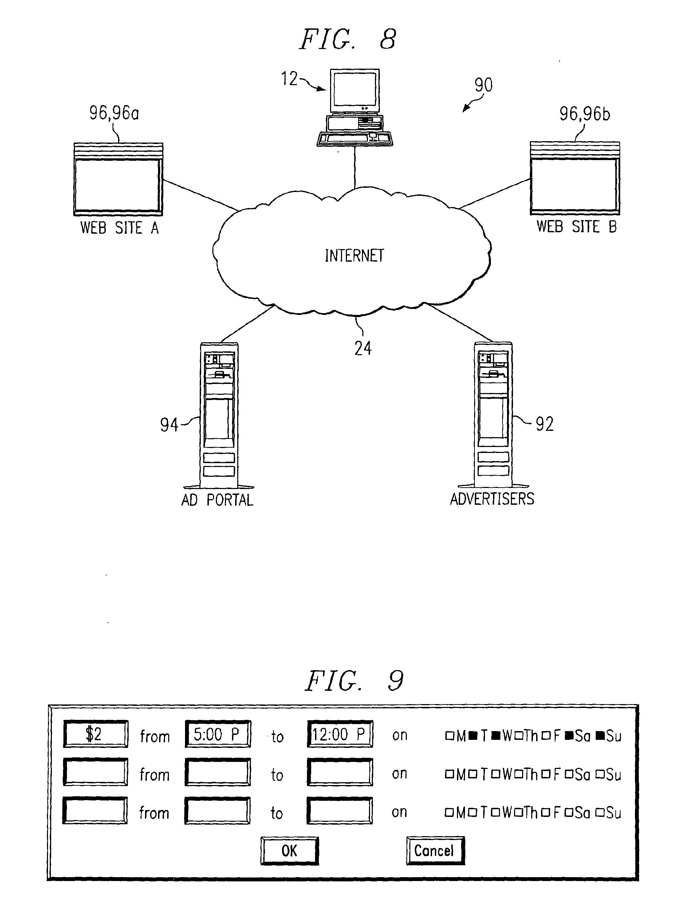

In Figure 7, a flow chart for a preferred embodiment of the Accounting task 46 is shown. In step 80, an advertisement notification is received from the Ad Filtering task 44. In decision block 82, the Accounting task 46 determines whether the advertisement has been seen before in the current browsing session. The purpose of tracking the occurrences of advertisements throughout the session is to prevent the user from simply switching between pages to accrue revenue, while the same advertisement is shown repeatedly. Accordingly, certain thresholds are maintained, for example, how many times a certain advertisement has been shown and the time between showings. If a repeat showing occurs within the thresholds in decision block 84, there is no charge for the advertisement in block 86. Otherwise, the user's account is credited in block 88 for the negotiated price. The user account is also credited if the advertisement was not shown previously in the session in decision block 82.

Several variations could be used in the Accounting task. One would use different price levels for repeat advertisements; for example, repeat advertisements could have a price, which was a predetermined fraction of the price of a new advertisement. Second, repeat advertisements could have a diminishing scale; for example, the first time an advertisement was displayed, the full price would be paid, thereafter a 10% reduction in price would be set for each successive showing.

In an alternative embodiment, advertisements could be shown free for the first time and the user could respond with (1) a payment demand for future ads for the same product or service or (2) a block request for an unlimited or set amount of time.

Also, as described above, in the preferred embodiment, the Accounting task may also account for user revenues based on profile uploads to advertisers. The basic steps would be the same as those shown in Figure 7 for advertisements. The Price Negotiating task 42 would inform the Accounting task 46 that a profile was uploaded to an advertiser. Once again, thresholds may be employed, such that an advertiser did not have to pay for repeated profile uploads during a predetermined period. The advertiser would then credit the account of the user for the profile.

The tasks shown in Figures 3-7 could be implemented on the user's computer. However, Figure 8 illustrates an embodiment 50 of the user-supporting system 28 where a third party site coordinates the advertising. In this embodiment, the software functions shown in Figure 3 are distributed over a user computer 12, an "advertising portal" 52 and one or more advertisers 54. Web sites 56 (individually referenced as web sites 56a and 56b) support advertising provided by advertisers 56. For purposes of discussion, the advertisers 52 could include any number of various types of direct and indirect advertisers.

In operation, the advertising portal 54 manages many of the services needed to provide the user-supporting advertising. A typical scenario would have a user log onto the advertising portal at the beginning of a web browsing session, in order to identify the current user. The advertising portal 54 would retrieve the associated profile 30 based on the login identifier. The profile 30 could be stored as a file either on the user computer and or on the ad portal 54.

After identification, the current profile could be modified, if desired by the user. Further, the advertising portal 54 could communicate with advertisers 52 to determine a "going-rate" for advertisements, to allow the user to set rates. If user sets rates too high, the user will not receive any advertisements or revenue. If the user sets rates too low, the user will receive less revenue than advertisings are willing to provide. After receiving the going rate, the user may wish to modify the profile to reflect current available rates. Also, the user may wish to modify the profile to obtain information on products/service that he or she wants to purchase in the near future.

Once the rates have been set; the user can access any sites on the Internet. Advertisements to the user computer 12 could be directed through the advertising portal 52, which would filter the ads and maintain the accounting. The advertising portal could provide services that would benefit both the user and the advertisers. First, the advertising portal could maintain the profiles so that non-paying advertisers could not derive information from the profile, which may be more difficult when stored on the user computer. Second, an advertising portal that represents a number of users may have more bargaining power with advertisers and will be able to consolidate information to provide the user with better information about rates. The advertising portal could also negotiate charges on a collective basis for registered users to get the best rates possible. Third, the portal 52 could add a level of security between the user and the advertisers to protect the users from intrusion outside of the advertising system.

Figure 9 illustrates a dialog box, which could be used to provide variable for an ad type based on the time of day and/or day of week. A user may want to increase advertising prices during busy times (for example, during the work day) and decrease advertising rates during free time (for example, a lunch break or after work). Other criteria could also be provided for.

The present invention provides significant advantages over the prior art. The profile can provide detailed information about the user, such as financial status, age, gender, occupation, interests, shopping habits and so on. Advertisers can judge which ads, if any, should be sent to the user based on the profile. Since the ads can be accurately directed to the user, the extra value in the advertisement accuracy can be used to pay the user a fee. The user profits from the advertising and is therefore more likely to visit sites, which provide user-supporting advertising. Since the advertisements are much more likely to be of interest to the user, the user will pay more attention to the advertisements during browsing.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A method of advertising on a network, comprising the steps of:
receiving information from a user profile associated with a user;
crediting a user account responsive to sending advertisements to said user over the network.

2. The method of claim 1 wherein said receiving step comprises the step of receiving personal information associated with the user.

3. The method of claim 2 wherein said receiving step comprises the step of receiving financial information about the user.

4. The method of claim 1 wherein said receiving step comprises the step of receiving information regarding personal property owned by said user.

5. The method of claim 1 wherein said receiving step comprises the step of receiving information regarding the interests of a user.

6. The method of claim 1 wherein said receiving step comprises the step of receiving shopping preference information associated with the user.

7. The method of claim 1 wherein said receiving step comprises the step of receiving information on sites visited on the network by said user.

8. The method of claim 1 wherein said receiving step comprises the step of receiving information regarding advertisement types excluded by the user.

9. The method of claim 1 wherein said receiving step comprises the step of receiving information regarding upcoming gift purchasing by the user.

10. The method of claim 1 wherein said receiving step comprises the step of receiving all or part of the profile to said one or more advertisers.

11. The method of claim 1 wherein said receiving step comprises the step of receiving information from the profile responsive to a query.

12. The method of claim 1 wherein said step of crediting the user account comprises the step of crediting money to a bank account controlled by said user.

13. The method of claim 1 wherein said step of crediting the user account comprises the step of crediting points to an account, wherein said points can be redeemed for products or services.

14. The method of claim 1 and further comprising the step of filtering advertisements from advertisers that do not have an agreement to credit said user's account.

15. The method of claim 1 and further comprising the step of crediting said one or more advertisers credit said user's account in return for receiving information from the profile.

16. The method of claim 1 wherein said receiving step comprises the step of receiving information indicating a price for which the user is agreeable to receive an advertisement.

17. The method of claim 16 and further comprising the step of responding with a price that the advertiser is willing to pay for an advertisement.

18. The method of claim 16 wherein said user may specify different prices for different advertisements.

19. The method of claim 16 wherein the user may specify different prices based on the time of day.

20. The method of claim 16 wherein the user may specify different prices based on the day of week.

21. Circuitry for advertising on a network, comprising the steps of:
circuitry for receiving information from a user profile associated with a user;
circuitry for crediting a user account responsive to sending advertisements to said user over the network.

22. The circuitry of claim 21 wherein said receiving circuitry comprises circuitry for receiving personal information associated with the user.

23. The circuitry of claim 22 wherein said receiving circuitry comprises circuitry for receiving financial information about the user.

24. The circuitry of claim 21 wherein said receiving circuitry comprises circuitry for receiving information regarding personal property owned by said user.

25. The circuitry of claim 21 wherein said receiving circuitry comprises circuitry for receiving information regarding the interests of a user.

26. The circuitry of claim 21 wherein said receiving circuitry comprises circuitry for receiving shopping preference information associated with the user.

27. The circuitry of claim 21 wherein said receiving circuitry comprises circuitry for receiving information on sites visited on the network by said user.

28. The circuitry of claim 21 wherein said receiving circuitry comprises circuitry for receiving information regarding advertisement types excluded by the user.

29. The circuitry of claim 21 wherein said receiving circuitry comprises circuitry for receiving information regarding upcoming gift purchasing by the user.

30. The circuitry of claim 21 wherein said receiving circuitry comprises circuitry for receiving all or part of the profile to said one or more advertisers.

31. The circuitry of claim 21 wherein said receiving circuitry comprises circuitry for receiving information from the profile responsive to a query.

32. The circuitry of claim 21 wherein said circuitry for crediting the user account comprises circuitry for crediting money to a bank account controlled by said user.

33. The circuitry of claim 21 wherein said circuitry for crediting the user account comprises circuitry for crediting points to an account, wherein said points can be redeemed for products or services.

34. The circuitry of claim 21 and further comprising circuitry for filtering advertisements from advertisers that do not have an agreement to credit said user's account.

35. The circuitry of claim 21 and further comprising circuitry for crediting said one or more advertisers credit said user's account in return for receiving information from the profile.

36. The circuitry of claim 21 wherein said receiving circuitry comprises circuitry for receiving information indicating a price for which the user is agreeable to receive an advertisement.

37. The circuitry of claim 36 and further comprising circuitry for responding with a price that the advertiser is willing to pay for an advertisement.

38. The circuitry of claim 36 wherein said user may specify different prices for different advertisements.

39. The circuitry of claim 36 wherein the user may specify different prices based on the time of day.

40. The circuitry of claim 36 wherein the user may specify different prices based on the day of week.
